# EUROPEAN PATENT SPECIFICATION

(11) **EP 1 346 316 B1**
(45) Date of publication and mention of the grant of the patent: **28.12.2005**
(21) Application number: 01983732.7
(22) Date of filing: 19.11.2001
(51) Int. Cl.: G06K 19/077

(54) **ELECTRONIC DATA STORAGE MEDIUM**
ELEKTRONISCHER DATENTRÄGER
SUPPORT ELECTRONIQUE DE STOCKAGE DE DONNEES

(30) Priority: 28.11.2000 FR 0015323
(43) Date of publication of application: 24.09.2003
(73) Proprietor: Axalto S.A., 92120 Montrouge (FR)
(72) Inventor: BILLEBAUD, Pascal, F-45000 Orléans (FR); REIGNOUX, Yves, F-45380 Cléry Saint André (FR)
(86) International application number: PCT/IB2001/002203
(87) International publication number: WO 2002/045010

(56) References cited:
- EP-A- 0 371 855
- EP-A- 0 810 547
- FR-A- 2 736 453

## Description

### Field of the invention

This invention concerns an electronic data storage medium of the type with a body of insulating material and a semiconductor component fixed in the said body and a mode of realization of such a storage medium.

An electronic data storage medium is considered to be a portable object composed of a body generally made from plastic material in which is fixed a semiconductor component formed by electronic circuits which can store data and generally process it. The semiconductor component is connected electrically to external electrical contact pads to make the electrical link between the semiconductor component and the circuits of a reading and writing device into which the storage medium is inserted.

The reading and writing device is associated with various devices controlled by the reader, these devices may be ticket distributors, payment terminals, fixed telephones or GSM type portable telephones. The term electronic memory cards or bank cards is used for the storage media used in payment terminals or in fixed telephones, these cards having a right parallelepiped body and reduced thickness whose dimensions are defined by standards. For portable telephones, the so-called SIM cards may have various types of body shape adapted to the readers associated with the portable telephones.

This invention concerns the various types of electronic data storage media defined above.

### Background of the invention

To manufacture these types of electronic data storage media, the technique most often used is as follows:
in a first step, a data storage medium body is created with the required external shape, and including a recess. In a second step, an electronic module is produced, composed of the semiconductor component which is fixed on a support, this support itself defining the external electrical contact pads connected to the semiconductor component. Lastly, the electronic module is fixed in the recess of the body of the electronic data storage medium.

These various steps and in particular the realization of the electronic module are relatively complex and therefore generate relatively high costs, whereas the manufacture of the electronic data storage medium must have a global manufacturing cost as low as possible so that this cost has no significant impact on the service that can be obtained using the electronic data storage medium.

Also, the electronic module is "relatively large" and it is difficult to fix in the recess of the body of the electronic data storage medium.

Other manufacturing methods of smart cards are disclosed in the document published under the number FR 2 736 453.

### Summary of the invention

The first objective of this invention is to supply a portable electronic data storage card which can be manufactured at a lower cost whilst offering the same quality.

To reach this objective, according to the invention, the portable electronic data storage card includes a body made from insulated plastic material which has two main parallel sides, a semiconductor component and a number of external electrical contact pads flush with the first main side of the body. It is characterized in that:
- said body includes a recess opening out onto the first main side, in which the semiconductor component is fixed,
- said storage card also includes:
   - a number of conducting elements, each conducting element having a first end flush with the first main side to form an external contact pad, a second end arranged in said recess and an intermediate part joining the first end and the second end; and
   - a number of connecting elements to electrically connect the terminals of the semiconductor component to the second ends of the conducting elements; the volume of said recess not occupied by the said semiconductor component being filled by an insulating material,
characterized in that the intermediate part of the conducting elements is kept away from the side wall of the recess and completely embedded in the plastic material of the body.

We can see that in the electronic data storage medium defined above, the conducting elements intended to form external electrical contact pads and some of the electrical connecting assembly between the semiconductor component and the external contact pads are partly buried in the plastic body of the data storage medium, thereby fastening them and positioning them with respect to the body of the data storage medium, this body including a recess in which the semiconductor component alone can be easily fixed. After fitting the electrical connecting elements, the recess is filled with a plastic material such as an epoxy resin to obtain the final shape of the electronic data storage medium.

According to a preferred mode of realization, the electrical data storage device is characterized in that each electrical conducting element has the shape of a blanked part, the two ends of this part being approximately parallel and the intermediate part being inclined and having a non rectilinear shape, the recess being offset with respect to the portion of the main side of the body containing the first ends of the electrical conducting elements which form the external electrical contact pads.

According to this preferred mode of realization, the recess intended to receive the semiconductor component is offset with respect to the location of the external electrical contact pads. It is therefore possible to use a large semiconductor component whilst giving all the external electrical contact pads the configuration which is provided for in particular by the ISO standards concerning bank cards or cards for fixed telephones.

Another objective of this invention is to supply a mode of realization of a portable electronic data storage card which reduces the cost of manufacture whilst producing electronic data storage media which have the same characteristics as with the modes of realization of the prior art.

To reach this objective according to the invention, the method of manufacturing a portable electronic data storage card including a body, a semiconductor component, external electrical contact pads and electrical connecting elements between said component and said external contact pads, includes the following steps:
- a mould is supplied, whose cavity has the shape of the body to be produced, said cavity having one main side flat, said mould having a core projecting into the said main side;
- in said cavity a number of electrical conducting elements are arranged, each having a first end applied against said main side, to form an external contact pad, a second end applied against said core and an intermediate part joining the first end and the second end ;
said method being characterized in that the step of arranging electrical conducting elements is made in such a manner that the intermediate part is kept away from the side wall of the core, and in that the method includes the further following steps :
- a hot thermoplastic material is injected under pressure into said cavity so that said material fills the entire volume of the cavity in such a manner that the intermediate part is completely embedded in the thermoplastic material;
- the part so produced is demoulded, to obtain the body of the data storage card with a recess, the first ends of the conducting elements being flush with the main side, the second ends of the conducting elements being flush with the bottom of said recess, the intermediate part of the conducting elements being completely embedded in the thermoplastic material of the body;
- said semiconductor component is fixed in the said recess;
- second ends of the conducting elements are connected electrically to the terminals of the semiconductor component; and
- volume of the said recess not occupied by the said semiconductor component is filled with an insulating material.

Other features and advantages of the invention will appear on reading the description which follows of several modes of realization of the invention given as non-limiting examples. The description refers to the attached figures, on which:

### Brief description of the drawings

figure 1 is a vertical cross section of an injection mould which can be used to manufacture the data storage medium;
figures 2a to 2c are vertical cross sections of the storage device illustrating the various steps of its manufacture;
figure 3 is a partial plan view of a finished data storage medium;
figure 4 is a plan view of a first realization variant of the data storage medium;
figure 5 is a plan view of a second realization variant of the data storage medium; and
figure 6 is a partial vertical cross section of a third realization variant of the data storage medium.

### Detailed description

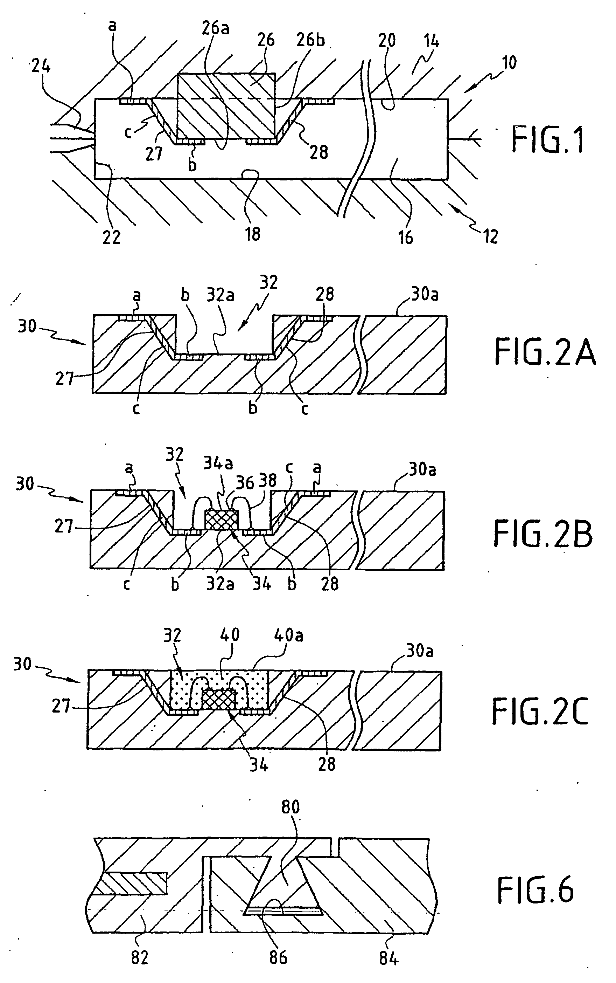

Referring firstly to figures 1 to 3, we will describe a preferred mode of realization of the electronic data storage medium.

Figure 1 shows a vertical cross section of an injection mould which can be used to manufacture the body of the data storage medium. The mould 10 is formed from a lower fixed part 12 and an upper mobile part 14 which define a hollow or cavity. The cavity 16 has the external shape of the body of the data storage device and has two main flat parallel sides 18 and 20 and an outer edge 22 defined by parts 12 and 14 of the mould. The mould also has a injection nozzle 24 for the plastic material used to make the body of the data storage medium. In the main side 20 of the mould cavity 16 a core 26 is mounted, projecting into the main side 20 to form a recess in the body obtained by moulding.

Before injecting the plastic material through the nozzle 24, conducting elements such as 26 and 27 are positioned, intended to form the external electrical contact pads of the storage medium and part of the connection between the semiconductor components and the external contact pads. In this mode of realization, the conducting elements 26 and 27 include a first end a, a second end b and an intermediate part c which are obtained for example by folding a metal strip. The ends a and b are parallel whereas the intermediate part c is inclined. The mould 10 includes means not represented to press the ends a of the conducting elements 26 and 28 against the main wall 20 of the cavity 16 and means to press the second ends b against the end side 26a of the core 26.These support means can either be vacuum systems or electromagnetic systems. It must be pointed out that the intermediate parts c of the conducting elements 27 and 28 are kept away from the side wall 26b of the core 26. Means are also provided to maintain the positioning of the conducting elements 27 and 28 in the mould cavity.

The thermoplastic material is injected into the mould cavity 16 via the injection nozzle(s) 24.The material is injected hot and under pressure. The injection material can be for example ABS or other similar materials. If ABS is used, the injection temperature lies preferably between 270 and 290°C whereas the mould and the core are kept at a temperature of preferably between 10 and 50°C.

After solidification of the moulding material, the part so produced is demoulded. It is represented on figure 2a. It consists of a moulded part 30 forming the body of the data storage medium which of course has the shape of the mould cavity 16 with the recess 32 formed by the core 26.The conducting elements 27 and 28 are fastened to the body 30 especially due to the fact that their intermediate parts c are buried in the plastic material. However, the first ends of the conducting elements a are flush with the main side 30a of the data storage medium whereas the second ends b are flush with the bottom 32a of the recess.
In the next step represented by figure 2b, the semiconductor component 34 is fixed on the bottom 32a of the recess 32 by any suitable means. The semiconductor component includes terminals 36 in its upper side 34a. The electrical connection between the terminals 36 of the semiconductor components and the ends b of the conducting elements 27, 28 are made with soldered conducting wires such as 38.

To carry out this step, the "flip-chip" technique can also be used. This technique consists of making a conducting bump on each terminal of the semiconductor chip. These bumps are fixed directly on the ends b of the conducting elements 28. This avoids the use of conducting wires. We can see that in this case, the side 34a of the semiconductor chip with the terminals 36 is turned towards the bottom 32a of the recess 32. Preferably, a layer of insulating material is first applied on side 34a of the chip between the conducting bumps, this layer having approximately the same thickness as the bumps.

In the last step illustrated by figure 2c, the volume of the recess 32 not occupied by the semiconductor component 34 is filled with an insulating plastic material 40 which may, for example, be an epoxy resin. The upper side 40a of this material may possibly be machined on the surface so that this upper side is flush in the upper side 30a of the body of the data storage medium.

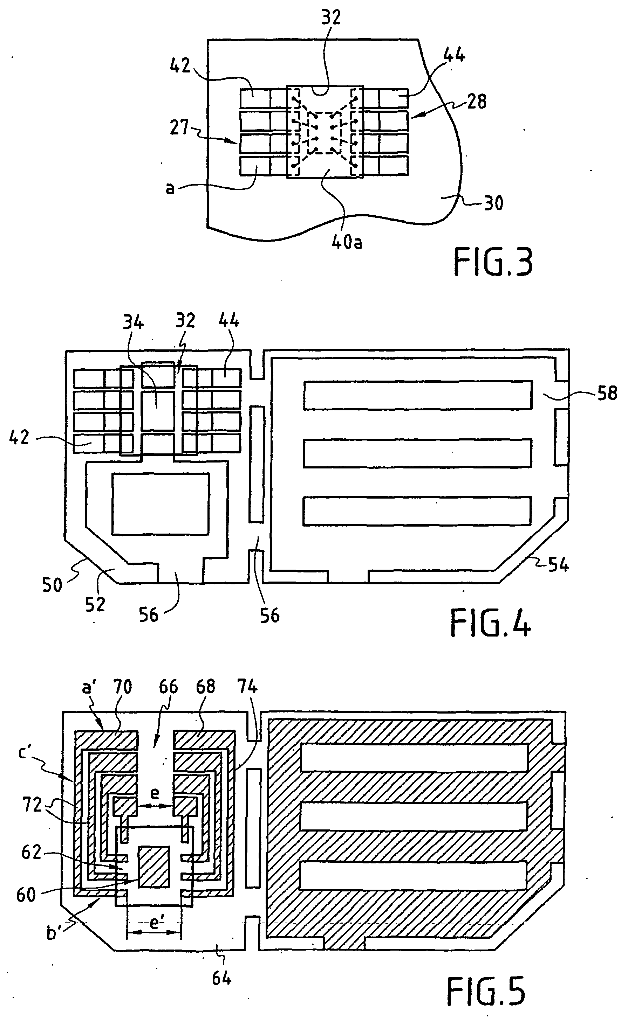

Figure 3 represents a plan view of part of the body 30 of the data storage medium. This figure shows the ends a of the conducting elements 27 and 28. Preferably, the conducting elements 27 and 28 are arranged in two parallel rows of four conducting elements. These ends a form the external electrical contact pads 42 and 44 of the data storage medium. This figure also shows the upper side 40a of the plastic material filling the recess 32.

Figure 4 represents a plan view of a realization variant of the electronic data storage medium if this storage medium forms a SIM card of modifiable dimensions. The body of the storage medium 50 which is obtained by moulding, as previously explained, has a first portion 52 which contains the semiconductor component 34 and a second portion 54, these two portions being connected by snap-off areas 56 made from the same plastic material. To provide the mechanical strength of the body of the data storage medium, during the injection moulding, it would be possible to insert metal grids such as 56 and 58 in the mould cavity. The internal sides of the two parts of the mould are preformed to obtain the hollows defining the snap-off areas 56.

Preferably, the card body obtained by moulding has the dimensions of an ISO type card, i.e. rectangular shape with dimensions approximately 8.5 mm x 55 mm. From the card so obtained, a card with the shape represented on figures 4 and 5 can be obtained, either by planning, during the moulding, pre blanking slots or by blanking the card body after the moulding step.

In the mode of realization represented on figure 4, the external electrical contact pads 42 and 44 are arranged each side of the recess 32 containing the semiconductor component 34. This arrangement is only suitable if the semiconductor component 34 has relatively reduced dimensions so that connecting elements can be fitted between the terminals of the semiconductor component and the external contact pads represented on figures 2. This is the configuration which is presently used for bank cards or cards for fixed telephones.

Figure 5 represents a realization variant allowing the use of a semiconductor component 60 of larger dimensions.

According to this mode of realization, the recess 62 made in the body 64 to take the semiconductor component 60 is offset with respect to the area 66 of the body, flush with the external electrical contact pads 68 and 70. To obtain this offset, the electrical conducting elements 72 and 74 placed in the mould have a special shape. Each conducting element 72 or 74 has a first end a', a second end b' and an intermediate part c'. The first and second ends a' and b' are identical with the ends a land b of figure 2 or 4. However, the intermediate part c' is blanked from a conducting sheet so as to produce a non rectilinear shape (U shape) to obtain the offset between the recess 62 and the external contact pads 68 and 70 formed by the ends a' of the conducting elements 72 and 74. We may also consider that the intermediate parts c' of the conducting elements 72 and 74 are perpendicular to the ends a' and b'.

With this arrangement, the spacing e between the two rows of external contact pads 68 and 70 provided for by the standards can be respected whilst creating a space e' between the second ends b' of the conducting elements which is compatible with the dimensions of the semiconductor components 60.

Figure 6 shows a third mode of realization of the card body. During the moulding operation, a special shape is planned for the cavity in order to realize a projection 80 of the card body 82 parallel to one edge of the card body. This projection forms a male clipping part, for example, in the shape of a dovetail. The card body 82 can then be fixed on an extension 84 of the card body so that the body of the card so obtained has greater dimensions. The extension 84 includes, for example, a groove 86, also in the shape of a dovetail, to clip mechanically onto the male part 80.

## Claims

1. A portable electronic data storage card including a body (30) made from insulated plastic material which has two main parallel sides (30a), a semiconductor component (34) and a number of external electrical contact pads (42, 44) flush with the first main side (30a) of the body,
- said body including a recess (32) opening out onto the first main side, in which the semiconductor component is fixed,
- said storage card also including:
• a number of conducting elements (26, 28), each conducting element having a first end (a) flush with the first main side to form an external contact pad, a second end (b) arranged in said recess and an intermediate part (c) joining the first end (a) and the second end (b); and
• a number of connecting elements (38) to electrically connect the terminals (36) of the semiconductor component to the second ends (b) of the conducting elements; the volume of said recess not occupied by the said semiconductor component being filled by an insulating material (40),
**characterized in that** the intermediate part (c) of the conducting elements is kept away from the side wall of the recess (32) and completely embedded in the plastic material of the body.

2. The card according to claim 1, wherein each electrical conducting element (26, 28) has the shape of a folded conducting strip, the two ends (a, b) being approximately parallel and the intermediate part (c) being inclined, said recess (32) being arranged between the first ends (a) of the conducting elements forming the external contact pads (42, 44).

3. The card according to claim 1, wherein each electrical conducting element (26, 28) has the shape of a blanked part, the two ends (a, b) being approximately parallel and the intermediate part (c) being inclined and having a shape not rectilinear with said ends, said recess (32) being offset with respect to the portion of the main side of the body (30) containing the first ends of the electrical conducting elements.

4. The card according to claim 1, wherein said body (30, 50, 82) has the shape of a right parallelepiped with two main sides (30a) parallel and an edge.

5. The card according to claim 4, wherein said body (50) has aligned hollows separating a first body portion (52) containing said semiconductor component (34) and said external contact pads (42, 44), and a second portion (54), said hollows enabling the two body portions to be separated.

6. The card according to claim 4, wherein said body (82) has near its edge elements (80) to clip onto another part.

7. A method of manufacturing a portable electronic data storage card including a body (30), a semiconductor component (34), external electrical contact pads (42, 44) and electrical connecting elements between said component and said external contact pads, said method comprising:
- supplying a mould (10), whose cavity (16) has the shape of the body to be produced, said cavity having one main side (20) flat, the said mould having a core (26) projecting into said main side;
- arranging a number of electrical conducting elements (26, 27) in said cavity, each having a first end (a) applied against said main side, to form an external contact pad, a second end (b) applied against said core and an intermediate part (c) joining the first end (a) and the second end (b);
**characterized in that** the step of arranging electrical conducting elements is made in such a manner that the intermediate part (c) is kept away from the side wall of the core (26), and **in that** the method further comprises the steps of :
- injecting a hot thermoplastic material under pressure into said cavity so that the said material fills the entire volume of the cavity in such a manner that the intermediate part (c) is completely embedded in the thermoplastic material;
- demoulding the part so produced, to obtain the body of the portable data storage card with a recess (32), the first ends of the conducting elements being flush with the main side (30a), the second ends of the conducting elements being flush with the bottom of said recess, and the intermediate part (c) of the conducting elements being completely embedded in the thermoplastic material of the body;
- fixing said semiconductor component in said recess;
- electrically connecting the second ends of the conducting elements to the terminals (36) of the semiconductor component; and
- filling the volume of said recess not occupied by said semiconductor component with an insulating material (40).

## Patentansprüche

1. Tragbare elektronische Datenspeicherkarte mit einem Körper (30) aus isoliertem Kunststoff, die zwei Hauptparallelseiten (30a), eine Halbleiterkomponente (34) und eine Anzahl externer elektrischer Kontaktpolster (42, 44) aufweist, die mit der ersten Hauptseite (30a) des Körpers bündig sind,
- der Körper weist eine sich zur ersten Hauptseite hin öffnende Aussparung (32) auf, an der die Halbleiterkomponente befestigt ist,
- die Speicherkarte beinhaltet darüber hinaus:
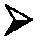 eine Reihe von Schaltelementen (26, 28), wobei jedes Schaltelement ein erstes Ende (a), bündig mit der ersten Hauptseite aufweist, und einen externen Kontakt bildet, weiter ein in der beschriebenen Aussparung angebrachtes zweites Ende (b) und ein das erste Ende (a) und das zweite Ende (b) miteinander verbindendes Zwischenstück (c) aufweist; und
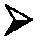 Eine Reihe von Verbindungselementen (38) zur elektrischen Verbindung der Klemmen (36) der Halbleiterkomponente mit den zweiten Enden (b) der Schaltelemente; wobei das durch die genannte Halbleiterkomponente nicht ausgefüllte Volumen der Aussparung, mit einem Isoliermaterial (40) gefüllt ist **dadurch gekennzeichnet, dass** das Zwischenstück (c) der Schaltelemente fern der Seitenwand der Aussparung (32) und komplett in das Kunststoffmaterial des Körpers eingebettet ist.

2. Karte nach Anspruch 1, in welcher jedes elektrische Schaltelement (26, 28) die Form eines gefalteten Schaltstreifens aufweist, wobei die beiden Enden (a, b) annähernd parallel verlaufen und das Zwischenstück (c) geneigt ist und die Aussparung (32) zwischen den die externen Kontaktpolster (42, 44) bildenden ersten Enden (a) der Schaltelemente liegt.

3. Karte nach Anspruch 1, bei der jedes elektrische Schaltelement (26, 28) die Form eines ausgestanzten Teils hat, die beiden Enden (a, b) annähernd parallel verlaufen und das Zwischenstück (c) geneigt ist und eine nicht geradlinige Form mit den Enden bildet und die beschriebene die ersten Enden der elektrischen Schaltelemente aufnehmende Aussparung (32) einen Versatz im Verhältnis zum Teilstück der Hauptseite des Körpers (30) aufweist.

4. Karte nach Anspruch 1, deren Körper (30, 50, 82) die Form eines rechten Parallelflachs mit zwei parallelen Hauptseiten (30a) und einer Kante aufweist.

5. Karte nach Anspruch 4, deren Körper (50) aufeinander ausgerichtete Hohlräume aufweist, die einen ersten Teil des die Halbleiterkomponente (34) und die externen Kontaktpolster (42, 44) aufnehmenden Körpers (52) und einen zweiten Teil (54) trennt, wobei die Hohlräume die Trennung der beiden Teile des Körpers ermöglichen.

6. Karte nach Anspruch 4, bei der der Körper (82) in der Nähe der Kante Elemente (80) zur Befestigung an ein anderes Teil aufweist.

7. Methode zur Herstellung einer tragbaren elektronischen Datenspeicherkarte einschließlich eines Körpers (30), einer Halbleiterkomponente (34), externer elektrischer Kontaktpolster (42, 44) und elektrischer Verbindungselemente zwischen der Komponente und den elektrischen Kontaktpoistern, wobei die beschriebene Methode folgendes umfasst:
- Lieferung einer Gussform (10), deren Hohlraum (16) die Form des herzustellenden Körpers aufweist, wobei der Hohlraum eine flache Hauptseite (20) und die Gussform einen in die genannte Hauptseite hineinragenden Kern (26) aufweist;
- Anordnung einer Reihe elektrischer Schaltelemente (26, 27) in dem Hohlraum, wobei jedes zur Bildung eines externen Kontaktpolsters ein erstes an die Hauptseite anliegendes Ende (a), ein gegen den Kern anliegendes zweites Ende (b) und ein das erste Ende (a) mit dem zweiten Ende (b) verbindendes Zwischenstück (c) aufweist; **dadurch gekennzeichnet, dass** der Schritt der Anordnung elektrischer Schaltelemente so vorgenommen wird, dass das Zwischenstück (c) von der Seitenwand des Kerns (26) entfernt bleibt, und, dass die Methode folgende Schritte beinhaltet:
- Einspritzung eines heißen, thermoplastischen Materials unter Druck in die Aussparung, so dass das Material das gesamte Volumen des Hohlraums so ausfüllt, dass das Zwischenstück (c) komplett in das thermoplastische Material eingebettet ist;
- Herauslösen des so hergestellten Teils aus der Form, um den Körper der tragbaren Datenspeicherkarte mit Aussparung (32) zu erhalten, wobei die ersten Enden der Schaltelemente bündig mit der Hauptseite (30a) sind, die zweiten Enden der Schaltelemente bündig mit dem Boden der Aussparung, und das Zwischenstück (c) der Schaltelemente komplett in das thermoplastische Material des Körpers eingebettet ist;
- Befestigung der Halbleiterkomponente in der Aussparung;
- Elektrischer Anschluss der zweiten Enden der Schaltelemente an die Klemmen (36) der Halbleiterkomponente; und
- Auffüllen des nicht durch die genannte Halbleiterkomponente ausgefüllten Volumens der genannten Aussparung mit einem Isoliermaterial (40).

## Revendications

1. Une carte électronique de stockage d'informations comprenant un corps (30) réalisé en matériau plastique isolant et présentant deux faces principales (30a) parallèles entre elles, un composant semi-conducteur (34) et une pluralité de plages externes (42, 44) de contact électrique affleurant dans la première face principale (30a) du corps ;
- ledit corps comporte une cavité (32) débouchant dans la première face principale dans laquelle est fixé le composant semi-conducteur,
- ladite carte de stockage comprend en outre :
• une pluralité d'éléments conducteurs (26, 28) chaque élément conducteur comportant une première extrémité (a) affleurant dans la première face principale pour former une plage externe, une deuxième extrémité (b) disposée dans ladite cavité et une partie intermédiaire (c) joignant la première (a) et la deuxième extrémité (b) ; et
• une pluralité d'éléments de connexion (38) pour relier électriquement les bornes (36) du composant semi-conducteur aux deuxièmes extrémités (b) des éléments conducteurs ; le volume de ladite cavité non occupé par ledit composant semi-conducteur étant rempli par un matériau isolant (40),
**caractérisé en ce que** la partie intermédiaire (c) des éléments conducteurs est à distance des parois de la cavité (32) et complètement noyée dans le matériau plastic du corps.

2. La carte selon la revendication 1, dans laquelle chaque élément conducteur électrique (26, 28) a la forme d'une lame conductrice pliée, les deux extrémités (a, b) étant sensiblement parallèles entre elles et la partie intermédiaire (c) étant inclinée, ladite cavité (32) étant disposée entre les premières extrémités (a) des éléments conducteurs formant les plages de contacts externes (42, 44).

3. La carte selon la revendication 1, dans laquelle chaque élément conducteur électrique (26, 28) a la forme d'une pièce emboutie, les deux extrémités (a, b) étant sensiblement parallèles entre elles et la partie intermédiaire (c) étant inclinée et présentant une forme non rectiligne avec lesdites extrémités, ladite cavité (32) étant décalée par rapport à la portion de la face principale du corps (30) dans laquelle se trouvent les premières extrémités des éléments conducteurs électriques.

4. La carte selon la revendication 1, dans laquelle ledit corps (30, 50, 82) a la forme d'un parallélépipède rectangle présentant deux faces principales (30a) parallèles entre elles et un bord.

5. La carte selon la revendication 4, dans laquelle ledit corps (50) comporte des évidements (56) alignés séparant une première portion de corps (52) contenant ledit composant semi-conducteur (34) et lesdites plages de contacts externes (42, 44), et une deuxième portion (54), lesdits évidements permettant la séparation des deux portions de corps.

6. La carte selon la revendication 4, dans laquelle ledit corps (82) comporte à proximité de son bord des éléments (80) de clipsage sur une autre pièce.

7. Procédé de fabrication d'une carte portable électronique de stockage d'informations comprenant un corps (30), un composant semi-conducteur (34), des plages externes de contact électrique (42, 44)et des éléments de connexion électrique entre ledit composant et lesdites plages externes, ledit procédé comprenant :
- la fourniture d'un moule (10) dont l'empreinte (16) a la forme du corps à réaliser, ladite empreinte présentant une face principale (20) plane, ledit moule comportant un noyau (26) faisant saillie dans ladite face principale ;
- la disposition dans ladite empreinte d'une pluralité d'éléments conducteurs électriques (26, 27) présentant chacun une première extrémité (a) appliquée contre ladite face principale, pour former une plage externe de contact, une deuxième extrémité (b) appliquée contre ledit noyau et une partie intermédiaire (c) joignant la première extrémité (a) et la deuxième extrémité (b) ;
**caractérisé en ce que** l'étape de positionnement des éléments conducteurs électriques est réalisée de sorte que la partie intermédiaire (c) est éloignée des parois du noyau (26), et **en ce que** le procédé comporte en outre les étapes de :
- injection sous pression à chaud dans ladite empreinte d'un matériau thermoplastique pour que ledit matériau remplisse la totalité du volume de l'empreinte de sorte que la partie intermédiaire (c) est complètement noyée dans le matériau thermoplastique ;
- démoulage de la pièce ainsi réalisée, par quoi on obtient le corps de la carte portable de stockage d'informations avec une cavité (32), les premières extrémités des éléments conducteurs affleurant dans la face principale (30a), les deuxièmes extrémités des éléments conducteurs affleurant dans la paroi de ladite cavité, et la partie intermédiaire (c) des éléments conducteurs étant noyée dans le matériau thermoplastique du corps ;
- fixation dudit composant semi-conducteur dans ladite cavité ;
- liaison électrique les deuxièmes extrémités des éléments conducteurs aux bornes (36) du composant semi-conducteur ; et
- remplissage par un matériau isolant (40) du volume de ladite cavité non occupé par ledit composant semi-conducteur.
